# EUROPÄISCHE PATENTANMELDUNG

(11) **EP 4 151 465 A1**
(43) Veröffentlichungstag der Anmeldung: **22.03.2023**
(21) Anmeldenummer: 22192628.0
(22) Anmeldetag: 29.08.2022
(51) Int. Cl.: B60P 3/34, B60P 3/38, B60J 7/16

(54) **CAMPINGFAHRZEUG**

(30) Priorität: 17.09.2021 DE 102021210311
(71) Anmelder: Herzog GmbH + Co. KG, 74366 Kirchheim (DE)
(72) Erfinder: Herzog, Erich, 74366 Kirchheim (DE); Bittermann, Jochen, 63571 Gelnhausen (DE)
(74) Vertreter: Patentanwälte Magenbauer & Kollegen Partnerschaft mbB

(57) **Zusammenfassung**

Die Erfindung betrifft ein Campingfahrzeug (1), mit einer ein an seiner Oberseite (5) eine Nutzfläche (6) eines Aufenthaltsraumes (7) definierendes, fahrzeugfestes Dachelement (4) aufweisenden Fahrzeugbasis (2) und mit einem Dachaufbau (9), der ein über dem fahrzeugfesten Dachelement (4) angeordnetes, zwischen einer abgesenkten Nicht-Gebrauchsstellung (14) und einer hochgestellten Gebrauchsstellung (15) verbringbares bewegliches Dachelement (16) aufweist, das in der hochgestellten Gebrauchsstellung (15) den Aufenthaltsraum (7) begrenzt, dadurch gekennzeichnet, dass der Dachaufbau (9) einen an dem fahrzeugfesten Dachelement (4) angeordneten, im Rahmen einer Arbeitsbewegung (31) unabhängig von dem beweglichen Dachelement (16) zwischen einer eingefahrenen Bereitschaftsstellung (32) und einer über das fahrzeugfeste Dachelement (4) hinausragenden ausgefahrenen Erweiterungsstellung (33) verstellbaren Erweiterungsboden (30) aufweist, der in der Erweiterungsstellung (33) eine die Nutzfläche (6) erweiternde Zusatznutzfläche (34) ausbildet.

## Beschreibung

Die Erfindung betrifft ein Campingfahrzeug, mit einer ein fahrzeugfestes, an seiner Oberseite eine Nutzfläche eines Aufenthaltsraumes definierendes Dachelement aufweisenden Fahrzeugbasis und mit einem Dachaufbau, der ein über dem fahrzeugfesten Dachelement angeordnetes, zwischen einer abgesenkten Nicht-Gebrauchsstellung und einer hochgestellten Gebrauchsstellung verbringbares bewegliches Dachelement aufweist, das in der hochgestellten Gebrauchsstellung den Aufenthaltsraum begrenzt.

Dachaufbauten sind bei Campingfahrzeugen seit langem bekannt und werden nachstehend kurz zusammengefasst:
In der deutschen Patentanmeldung DE 10 2004 005 589 A1 wird ein Aufstelldach für ein Fahrzeug, insbesondere für ein Campingfahrzeug, mit einem aufstellbaren Dachelement mit mehreren flexiblen, einen Faltenbalg bildenden Wänden vorgeschlagen, die einen Innenraum bilden, wobei beim Einklappen des Dachelements Mittel zum Zusammenfalten des Faltenbalges wirken, wobei als Mittel zumindest eine Scharnierstrebenanordnung vorgesehen ist, welche im aufgestellten Zustand des Dachelements derart vorgespannt ist, dass der Faltenbalg beim Einklappen des Dachelements zusammenfaltbar ist.

Die deutsche Patentanmeldung DE 10 2015 107 825 A1 offenbart ein Fahrzeug mit einem Dach, wobei innerhalb des Daches in Gebrauchsstellung eine Liegefläche für Personen vorgesehen ist. Die Liegefläche umfasst mindestens ein Liegepolster und mindestens ein Tragelement und liegt in Gebrauchsstellung auf zumindest einem Auflageelement auf, wobei die Liegefläche in Gebrauchsstellung entlang der Fahrzeug-Längsrichtung zumindest abschnittsweise teilbar.

Die deutsche Patentanmeldung DE 30 46 211 A1 zeigt eine Bettstelle für einen auf das Dach eines Fahrzeuges, insbesondere Wohnmobiles aufsetzbaren Dachaufsatz, welcher zur Schaffung eines Schlafraumes mit einem ihn übergreifenden, in der hochgestellten Lage über Streben und Aufstellscheren abgestützten Aufstelldach versehen ist, und innerhalb dessen eine im Wesentlichen die gesamte Breite des Grundfahrzeuges übergreifende, hauptsächlich aus einem Bettbrett und einer Polsterung bzw. Matratzenauflage bestehende Bettstelle angeordnet ist, dadurch gekennzeichnet, dass die Bettstelle beim Hochstellen des Aufstelldaches aus einer der Wölbung des Daches des Grundfahrzeuges angepassten Transportlage in eine ebene Gebrauchslage überführbar ist.

Nachteilig hieran ist, dass auch der zusätzlich durch den Dachaufbau gewonnene Aufenthaltsraum keine zufriedenstellend große Nutzfläche darstellt.

In der DE 21 2019 000 112 U9 offenbart ein Dachzelt, das eine Grundplatte, die lösbar am Dach des Fahrzeugs fixiert ist, eine Erweiterungsplatte, die drehbar so mit der Grundplatte verbunden ist, dass sie die Grundplatte überdeckt, eine Abdeckung, die drehbar mit der Grundplatte verbunden ist und die eine obere Oberfläche der Grundplatte freilegt und abschließt, eine Zelteinheit, die mit der Grundplatte verbunden ist und die sich aufspannt, wenn die Abdeckung von der Grundplatte weg gedreht wird, wodurch die obere Oberfläche der Grundplatte aufgedeckt werden kann, und eine Faltungshilfseinheit zur Unterstützung der Zelteinheit, um zu verhindern, dass die Zelteinheit aus der Abdeckung herausschaut, wenn die Zelteinheit wieder zusammengelegt wird, nachdem sie aufgespannt wurde, umfasst, wobei die Zelteinheit ein seitliches Zeltelement aufweist, das ihre seitliche Oberflächen bildet, und die Faltungshilfseinheit einen seitlichen Faltungsgurt aufweist, der mit der Grundplatte und/oder der Abdeckung verbunden ist.

DE 10 2021 104 861 A1 wird ein Freizeitfahrzeug, insbesondere Wohnmobil, mit einem Aufenthaltsbereich über einem Fahrersitzplatz als Alkoven, insbesondere Schlafbereich, gezeigt, wobei ein Dachbereich über dem Alkoven zur Raumerweiterung anhebbar ist und allseitig durch aufblasbare Hohlkammerelemente gebildete Seitenwände aufweist sowie die Hubbewegung bestimmende Leitelemente, wobei die Hubbewegung durch das Leitelement derart geführt wird, dass der Dachbereich vollständig abhebt und in seiner angehobenen Stellung um einen Winkel um eine Fahrzeugquerachse gedreht ist gegenüber seiner abgesenkten Stellung.

Aufgabe der Erfindung ist es daher einen über einen eine zufriedenstellend große Nutzfläche aufweisenden Aufenthaltsraum verfügenden Dachaufbau für ein Campingfahrzeug bereitzustellen.

Diese Aufgabe wird bei einem Campingfahrzeug der eingangs genannten Art dadurch gelöst, dass der Dachaufbau einen an dem fahrzeugfesten Dachelement angeordneten, im Rahmen einer Arbeitsbewegung unabhängig von dem beweglichen Dachelement zwischen einer eingefahrenen Bereitschaftsstellung und einer über das fahrzeugfeste Dachelement hinausragenden ausgefahrenen Erweiterungsstellung verstellbaren Erweiterungsboden aufweist, der in der Erweiterungsstellung eine die Nutzfläche erweiternde Zusatznutzfläche ausbildet. Vorteilhafterweise weist das Campingfahrzeug durch den Erweiterungsboden eine den Aufenthaltsraum erweiternde Zusatznutzfläche auf, durch die das Raumangebot des Campingfahrzeugs deutlich erhöht wird. Gleichzeitig verfügt der Erweiterungsboden des Campingfahrzeugs über eine Vielzahl an Erweiterungsstellungen, wodurch die Zusatznutzfläche bspw. an die Camping-Rahmenbedingungen - Anzahl der das Campingfahrzeug nutzenden Personen, vorhandenes Platzangebot des Campingplatzes usw. - optimal anpassbar ist.

Nach einer diesbezüglichen Weiterbildung des Campingfahrzeug ist dem Erweiterungsboden eine Stützstruktur zugeordnet. Die Stützstruktur dient als lastabtragendes Element für die sich durch den Erweiterungsboden ergebenden Vertikallasten, wobei die Stützstruktur gleichzeitig als raumgestaltendes Element eine größtmögliche Raumnutzung unterhalb des Erweiterungsbodens ermöglicht. Bevorzugt ist die Stützstruktur am Erweiterungsboden angeordnet, sodass diese die Arbeitsbewegung des Erweiterungsboden mitmacht. Durch die Anordnung am Erweiterungsboden ist die Stützstruktur stets am Campingfahrzeug angeordnet und kann nicht verloren werden. Besonders bevorzugt ist die Stützstruktur an einem Erweiterungsboden-Abschlusselement des Erweiterungsbodens angeordnet, insbesondere an einer Unterseite des Erweiterungsboden-Abschlusselements. Zweckmäßigerweise weist die Stützstruktur wenigstens eine Stütze auf, die zweckmäßigerweise ausklappbar und/oder teleskopierbar ist. Hierdurch ist die Stützstruktur optimal an die äußeren Geländegegebenheiten bspw. das Gelände des Campingplatzes, anpassbar.

Ferner ist dem Erweiterungsboden eine Tragstruktur zugeordnet. Durch die Tragstruktur wird der Erweiterungsboden in einer Erweiterungsstellung stabilisiert. Bevorzugt ist die Tragstruktur am Erweiterungsboden angeordnet, sodass diese die Arbeitsbewegung des Erweiterungsboden mitmacht. Hierdurch ist die Tragstruktur am Erweiterungsboden des Campingfahrzeugs angeordnet und kann nicht verloren werden. Besonders bevorzugt ist die Tragstruktur an einem Erweiterungsboden-Abschlusselement des Erweiterungsbodens angeordnet, insbesondere an der Unterseite oder Stirnseite des Erweiterungsboden-Abschlusselements. Zweckmäßigerweise weist die Tragstruktur wenigstens ein Tragelement auf, das zweckmäßigerweise ausklappbar und/oder teleskopierbar ist. Durch eine derartige Anordnung der Tragstruktur ist diese in der Bereitschaftsstellung platzsparend am Erweiterungsboden anbringbar und trägt dennoch zur Stabilisierung des Erweiterungsbodens bei. Entsprechend einer diesbezüglichen Weiterbildung ist das wenigstens eine Tragelement in Form eines rechteckigen Profils, eines L-Profils, eines U-Profils oder eines C-Profils ausgebildet. Hierdurch wird die Stabilität des Erweiterungsbodens weiter erhöht, in dem der Erweiterungsboden bspw. auf einen horizontal angeordneten Träger des L-Profils aufgelegt oder zwischen den horizontal angeordneten Trägern des U-Profils oder C-Profils eingelegt wird.

Darüber hinaus ist gemäß einer Weiterbildung das Erweiterungsboden-Abschlusselement in Form eines L-Profils ausgebildet. In dieser vorteilhaften Ausführung des Erweiterungsboden-Abschlusselements ist zweckmäßigerweise die Stützstruktur an einer Unterseite des Erweiterungsboden-Abschlusselements und die Tragestruktur an einer Stirnseite des Erweiterungsboden-Abschlusselements angeordnet. Hierdurch wird in einer Erweiterungsstellung eine einfache Nutzung der Stütz- und Tragstruktur ermöglicht und eine einfaches Verstauen der Stütz- und Tragstruktur in der Bereitschaftsstellung erreicht.

Entsprechend einer zusätzlichen Weiterbildung des Campingfahrzeugs weist der Erweiterungsboden einen Ausziehmechanismus auf, der zweckmäßigerweise als Scherengitter ausgebildet ist. Der Ausziehmechanismus ermöglicht eine platzsparende Anordnung des Erweiterungsbodens in der Bereitschaftsstellung. Der bevorzugt als Scherengitter ausgebildete Auszugsmechanismus hat den Vorteil, dass der Erweiterungsboden neben einer großzügig ausgebildeten Zusatznutzfläche in der Erweiterungsstellung dem Erweiterungsboden auch Stabilität verleiht. Weiter bevorzugt weist der Erweiterungsboden in der Bereitschaftsstellung und in der Erweiterungsstellung eine gleiche Breite auf. Hierdurch wird die Zusatznutzfläche in Bezug auf deren Größe optimiert.

Bevorzugt ragt der Erweiterungsboden in der Erweiterungsstellung im Wesentlichen orthogonal zu einer Campingfahrzeuglängsachse über das fahrzeugfeste Dachelement hinaus. Diese Anordnung des Erweiterungsbodens ist besonders effizient in Bezug auf die Zusatznutzfläche des Erweiterungsbodens.

Gemäß einer Weiterbildung des Campingfahrzeugs weist der Dachaufbau eine Zeltkonstruktion auf. Diesbezüglich weist die Zeltkonstruktion zweckmäßigerweise ein im Rahmen einer Ausklappbewegung zwischen einer eingeklappten Nicht-Gebrauchsstellung und einer ausgeklappten Gebrauchsstellung verbringbares Erweiterungszelt auf, das in einer Gebrauchsstellung den Aufenthaltsraum begrenzt und die Nutzfläche und die Zusatznutzfläche überdeckt. Insbesondere wird dabei die Nutzfläche und die Zusatznutzfläche von dem Erweiterungszelt in einer Gebrauchsstellung vollständig überdeckt. Vorteilhafterweise schützt die Zeltkonstruktion vor Wind und Wetter, insbesondere jedoch vor Regen.

Bevorzugt weist das Erweiterungszelt eine Erweiterungszelttragstruktur auf, insbesondere einen Erweiterungszeltbügel, der in der ausgeklappten Gebrauchsstellung eine gestraffte Erweiterungszeltwand aus einem flexiblen Material aufspannt, wobei diese einerseits an der Erweiterungszelttragstruktur und andererseits an einer Unterseite des beweglichen Dachelements angeordnet ist.

Ferner weist der Dachaufbau eine Haltestruktur auf, die in der ausgeklappten Gebrauchsstellung des Erweiterungszelts das bewegliche Dachelement in der hochgestellten Gebrauchsstellung hält, wobei die Haltestruktur insbesondere aus wenigstens einer Haltestrebe oder einem Haltebügel ausgebildet ist. Hierbei ist oder wird die Haltestruktur durch die Ausklappbewegung des Erweiterungszelts in die ausgeklappte Gebrauchsstellung in eine Haltestellung verbringbar oder verbracht. Durch diese konstruktive Ausgestaltung wird ein Aufbau der Zeltkonstruktion erleichtert.

Nach einer zusätzlichen Weiterbildung weist die Zeltkonstruktion ferner ein den Aufenthaltsraum begrenzendes, die Zusatznutzfläche überdeckendes Tarpzelt auf. Bevorzugt weist das Tarpzelt eine Tarpzeltwand auf, die am Erweiterungszelt und am Erweiterungsboden anbringbar oder angebracht ist. Hierdurch wird ein ganzheitlicher Schutz des Aufenthaltsraums vor Wind und Wetter gewährleistet. Die Tarpzeltwand ist derart anordenbar, dass sie an wenigstens einer freien Kante des Erweiterungsbodens über diesen hinausragt, um zwischen der freien Kante des Erweiterungsbodens und der Tarpzeltwand einen Zwischenraum zu bilden, durch den hindurch ein Zutritt in den Aufenthaltsraum von außerhalb der Fahrzeugbasis her ermöglicht ist. Weiter ist die Tarpzeltwand derart am Erweiterungszelt und an freien Kanten des Erweiterungsbodens anbringbar, dass sie eine Trennwand bildet, durch die der über der Zusatznutzfläche liegende Raumbereich des Aufenthaltsraums gegen einen Zutritt von außerhalb der Fahrzeugbasis her verschlossen ist.

Gemäß einer weiteren Fortbildung des Campingfahrzeugs weist das Campingfahrzeug ein Vorzelt auf. Durch das Vorzelt kann auch der Raum unterhalb des Erweiterungsbodens als Aufenthaltsraum genutzt werden, wodurch sich der Aufenthaltsraum nicht unerheblich vergrößert und den Campingkomfort weiter steigert.

Das bewegliche Dachelement ist zweckmäßigerweise als Hub- oder Aufstelldach ausbildet.

Entsprechend einer zusätzlichen Weiterbildung des Campingfahrzeugs weist das bewegliche Dachelement ein Dachfenster auf. Bevorzugt ist das Dachfenster in einer dem beweglichen Dachelement zugeordneten Dachgaube angeordnet. Durch die Dachgaube wird der Aufenthaltsraum vergrößert, wobei insbesondere im Bereich der Dachgaube die Höhe des Aufenthaltsraums erhöht wird. Dies führt zu einem höheren Komfort. Durch das in der Dachgaube angeordnete Dachfenster wird der Aufenthaltsraum mit mehr Tageslicht versorgt.

Darüber hinaus weist das fahrzeugfeste Dachelement eine Dachluke und die Fahrzeugbasis einen Aufstieg auf, wodurch ein Zutritt in den Aufenthaltsraum aus der Fahrzeugbasis heraus ermöglicht ist. Hierdurch kann stets ein sicherer Zutritt in den Aufenthaltsraum aus dem Campingfahrzeug heraus erfolgen.

Nach einer zusätzlichen Weiterbildung des Campingfahrzeugs weist der Erweiterungsboden eine sich im Wesentlichen über die Zusatznutzfläche erstreckende Fangstruktur auf, um ein Herabfallen von Gegenständen vom Erweiterungsboden zu verhindern. Diesbezüglich ist die Fangstruktur unter- und/oder oberhalb des Erweiterungsbodens angeordnet. Bevorzugt weist die Fangstruktur Dämmmaterial auf, um den Aufenthaltsraum thermisch zu isolieren. Insbesondere ermöglicht das Dämmmaterial ein der Jahreszeit entsprechende angenehme Temperatur des Aufenthaltsraumes, d.h. im Winter eine höhere Temperatur als die Umgebungstemperatur und in den Sommermonaten eine kühlere Temperatur als die Umgebungstemperatur. Vorteilhafterweise macht die Fangstruktur die Arbeitsbewegung des Erweiterungsboden mit. Hierdurch ist stets sichergestellt, dass keine Gegenstände aus dem Aufenthaltsraum bei der Arbeitsbewegung von diesem herabfallen können.

Nachfolgend wird die Erfindung anhand der beiliegenden Zeichnung näher erläutert und in dieser zeigen
- Figur 1: eine perspektivische Darstellung eines über einen Dachaufbau verfügenden Campingfahrzeugs,
- Figur 2: eine perspektivische Darstellung des Campingfahrzeugs mit einem beweglichen Dachelement in hochgestellter Gebrauchsstellung,

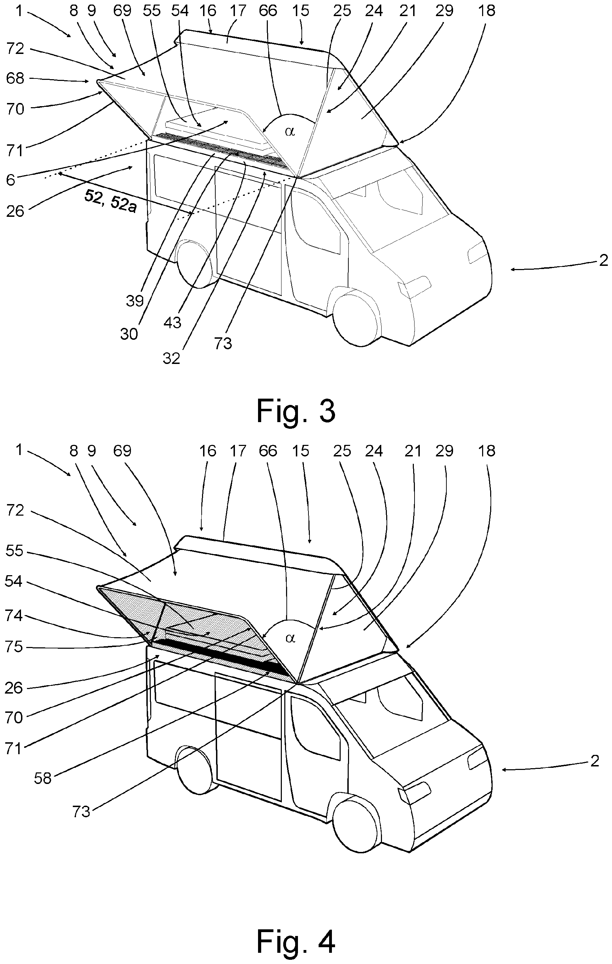

- Figur 3: eine perspektivische Darstellung des Campingfahrzeugs mit dem beweglichen Dachelement in hochgestellter Gebrauchsstellung und einem Erweiterungszelt in ausgeklappter Gebrauchsstellung,
- Figur 4: eine perspektivische Darstellung des Campingfahrzeugs mit dem beweglichen Dachelement in hochgestellter Gebrauchsstellung und dem Erweiterungszelt in ausgeklappter Gebrauchsstellung, wobei eine Erweiterungszeltöffnungsfläche mit einem Insektenschutznetz verschlossen ist,

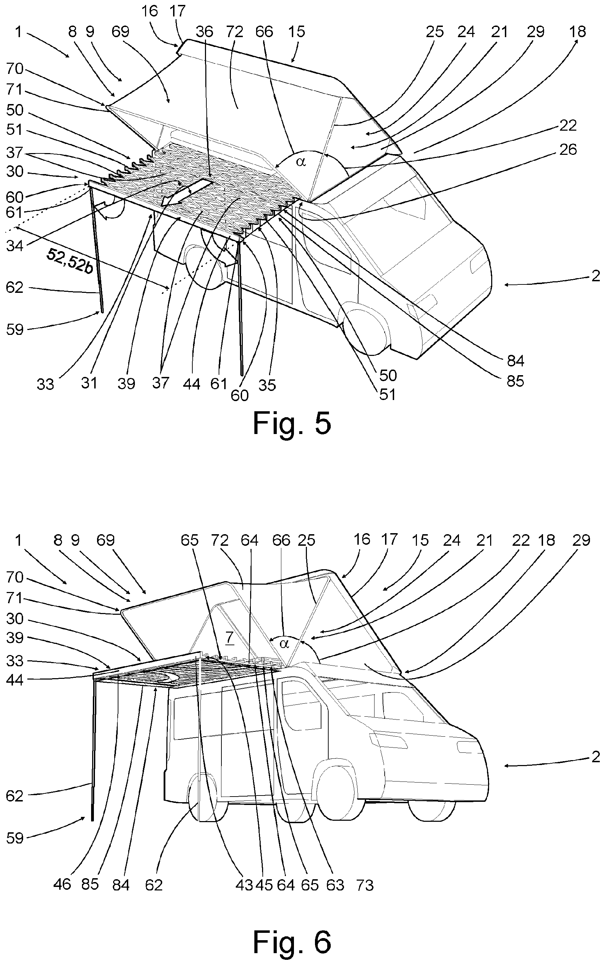

- Figur 5: eine perspektivische Darstellung des Campingfahrzeugs mit einem Erweiterungsboden in einer Erweiterungsstellung bei ausgeklappter Stützstruktur,
- Figur 6: eine perspektivische Darstellung des Campingfahrzeugs mit dem Erweiterungsboden in der Erweiterungsstellung bei ausgeklappter Stütz- und Tragstruktur,
- Figur 7: eine perspektivische Darstellung des Campingfahrzeugs mit dem Erweiterungsboden in der Erweiterungsstellung mit Ausschnitt A,
- Figur 8: den in Fig. 7 dargestellten Ausschnitt A im vergrö-ßerten Maßstab,
- Figur 9: eine perspektivische Darstellung des Campingfahrzeugs mit dem Erweiterungsboden in der Erweiterungsstellung, wobei eine Nutz- und eine Zusatznutzfläche des Erweiterungsbodens mit Matratzen ausgekleidet ist,
- Figur 10: eine perspektivische Darstellung des Campingfahrzeugs mit dem Erweiterungsboden in der Erweiterungsstellung, wobei eine Nutz- und eine Zusatznutzfläche des Erweiterungsbodens mit Matratzen und einem Laufboden ausgekleidet ist,
- Figur 11: eine perspektivische Darstellung des Campingfahrzeugs mit dem Erweiterungsboden in der Erweiterungsstellung bei geöffneter Seitenschiebetüre der Fahrzeugbasis,
- Figur 12: eine perspektivische Darstellung des Campingfahrzeugs mit dem Erweiterungsboden in der Erweiterungsstellung, wobei eine Nutz- und eine Zusatznutzfläche des Erweiterungsbodens mit Matratzen und einem Laufboden ausgekleidet ist, mit einem Zutritt in den Aufenthaltsraum von außerhalb der Fahrzeugbasis,
- Figur 13: eine perspektivische Darstellung des Campingfahrzeugs mit dem beweglichen Dachelement in hochgestellter Gebrauchsstellung und dem Erweiterungszelt in ausgeklappter Gebrauchsstellung mit dem Erweiterungsboden in der Erweiterungsstellung und mit am Erweiterungszelt angeordneten Tarpzelt,
- Figur 14: eine perspektivische Darstellung des Campingfahrzeugs mit dem beweglichen Dachelement in hochgestellter Gebrauchsstellung und dem Erweiterungszelt in ausgeklappter Gebrauchsstellung mit dem Erweiterungsboden in der Erweiterungsstellung und mit am Erweiterungszelt angeordneten Tarpzelt,
- Figur 15: eine perspektivische Darstellung des Campingfahrzeugs mit dem beweglichen Dachelement in hochgestellter Gebrauchsstellung und dem Erweiterungszelt in ausgeklappter Gebrauchsstellung mit dem Erweiterungsboden in der Erweiterungsstellung, mit einem Zutritt in den Aufenthaltsraum von außerhalb der Fahrzeugbasis,
- Figur 16: eine Vorderansicht des Campingfahrzeugs mit dem beweglichen Dachelement in hochgestellter Gebrauchsstellung und dem Erweiterungszelt in ausgeklappter Gebrauchsstellung mit dem Erweiterungsboden in der Erweiterungsstellung und daran angeordneten bodentiefen Tarpzelt und
- Figur 17: eine Prinzipskizze ein weiteren Scherengitters als Ausziehmechanismus des Erweiterungsbodens in Erweiterungsstellung.

Sofern keine anderslautenden Angaben gemacht werden, bezieht sich die nachfolgende Beschreibung auf sämtliche in der Zeichnung illustrierten Ausführungsformen eines erfindungsgemäßen Campingfahrzeugs 1.

Das Campingfahrzeug 1 verfügt über eine eine Campingfahrzeuglängsachse A-A aufweisende Fahrzeugbasis 2. Die Fahrzeugbasis 2 weist einen Innenraum 3 auf, der von einem fahrzeugfesten Dachelement 4 begrenzt wird, wobei das fahrzeugfeste Dachelement 4 an seiner Oberseite 5 eine Nutzfläche 6 eines Aufenthaltsraumes 7 definiert, und einen über eine Zeltkonstruktion 8 verfügenden Dachaufbau 9.

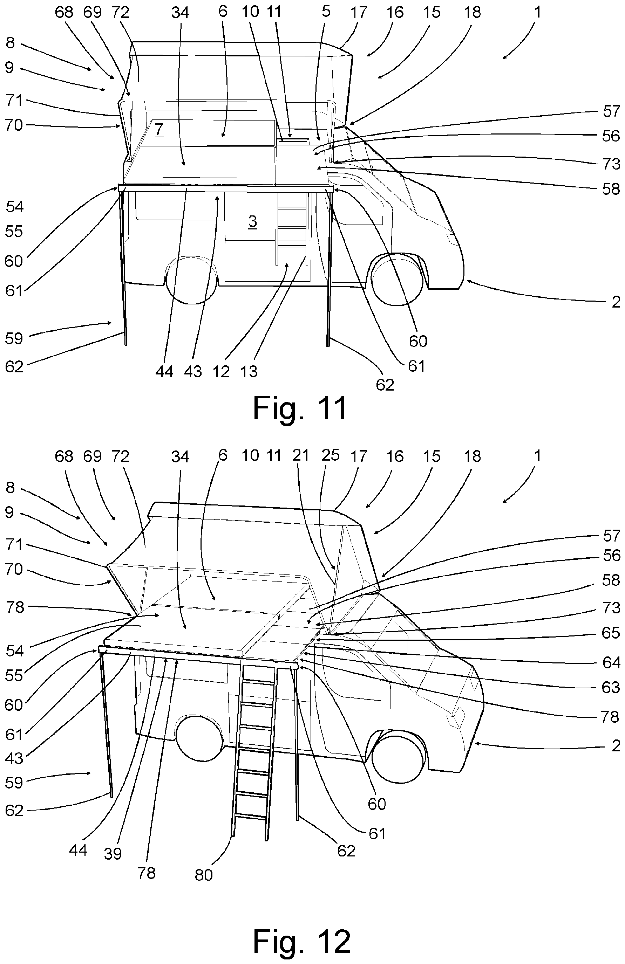

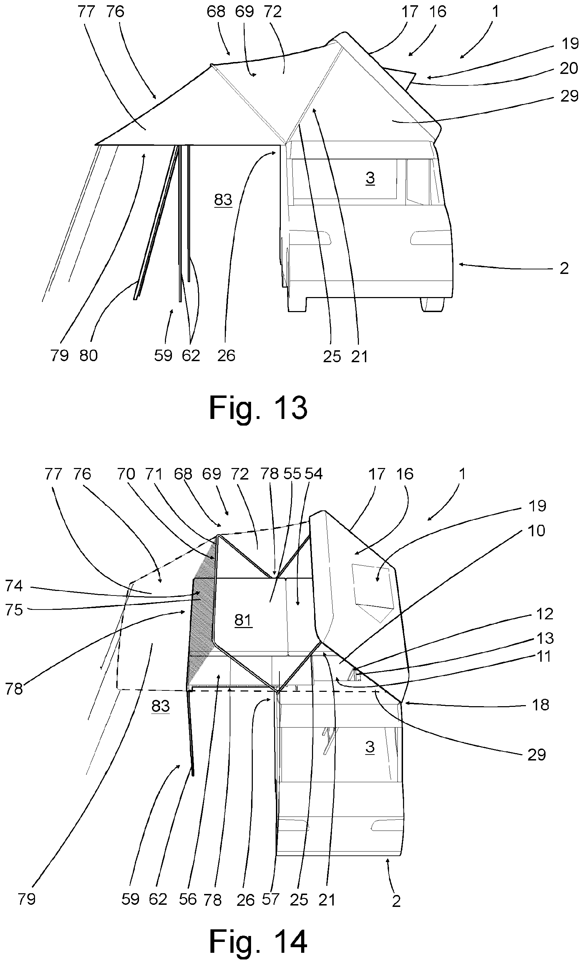

In der gezeigten Ausführungsform verfügt das fahrzeugfeste Dachelement 4 dabei über eine in Form einer Dachluke 10 ausgebildete Öffnung 11, der im Innenraum 3 der Fahrzeugbasis 2 ein Aufstieg 12 zugeordnet ist, wodurch ein Zutritt in den Aufenthaltsraum 7 aus dem Innenraum 3 der Fahrzeugbasis 2 heraus ermöglicht wird. Der Aufstieg 12 ist dabei zweckmäßigerweise als Leiter 13 ausgebildet, wie in den Fig. 11 und 14 dargestellt. In anderen nicht gezeigten Ausführungsformen wurde der Aufstieg 12 beispielsweise in Form einer Treppe realisiert.

Der Dachaufbau 9 weist ferner ein über dem fahrzeugfesten Dachelement 4 angeordnetes, zwischen einer abgesenkten Nicht-Gebrauchsstellung 14 und einer hochgestellten Gebrauchsstellung 15 verbringbares bewegliches Dachelement 16 auf. Das bewegliche Dachelement 16 begrenzt in der hochgestellten Gebrauchsstellung 15 den Aufenthaltsraum 7.

Das bewegliche Dachelement 16 ist insbesondere als Hubdach oder Aufstelldach 17 ausbildbar. In der dargestellten Ausführungsform ist das bewegliche Dachelement 16 als Aufstelldach 17 ausgebildet. Das Aufstelldach 17 ist am fahrzeugfesten Dachelement 4 an einer Anlenkseite 18 einseitig angelenkt und wird mittels einer Schwenkbewegung um eine Schwenkachse B-B von der abgesenkten Nicht-Gebrauchsstellung 14 in die hochgestellte Gebrauchsstellung 15 verbracht. In der gezeigten Ausführungsform weist das Aufstelldach 17 eine aufstellbare Dachgaube 19 auf, in der insbesondere ein Dachfenster 20 angeordnet ist. Durch die Dachgaube 19 wird der Aufenthaltsraum 7 vergrößert, wobei insbesondere im Bereich der Dachgaube 20 die Höhe des Aufenthaltsraums 7 erhöht wird. Ferner wird der Aufenthaltsraum 7 durch die Dachgaube 19 auch belüftet. Durch das in der Dachgaube 19 angeordnete Dachfenster 20 wird der Aufenthaltsraum 7 mit mehr Tageslicht versorgt.

Der Dachaufbau 9 verfügt über eine Haltestruktur 21, die durch eine Ausklappbewegung 22 zwischen einer abgesenkten Nicht-Haltestellung 23 in eine hochgestellte Haltestellung 24 verbringbar ist. Die Haltestruktur 21 hält in der hochgestellten Haltestellung 24 das als Aufstelldach 17 ausgebildete bewegliche Dachelement 16 in der hochgestellten Gebrauchsstellung 15. In der dargestellten Ausführungsform ist die Haltestruktur 21 hierzu zweckmäßigerweise als Haltebügel 25 ausgebildet. In einer nicht gezeigten Ausführungsform wird die Haltestruktur 21 durch Dachstreben realisiert.

Die in der Ausführungsform als Haltebügel 25 realisierte Haltestruktur 21 ist auf einer der Anlenkseite 18 gegenüberliegenden Seite 26 des fahrzeugfesten Dachelements 4 angelenkt. Die als Haltebügel 25 ausgebildete Haltestruktur 21 ist in der gezeigten Ausführungsform mittels eines Drehgelenk 27 mit dem fahrzeugfesten Dachelement 4 verbunden und entsprechend um eine Drehachse C-C des Drehgelenks 27 verschwenkbar.

In der hochgeklappten Gebrauchsstellung 15 des beweglichen Dachelements 16 ist jeweils zwischen einer Unterseite 28 des beweglichen Dachelements 16, dem Haltebügel 25 und dem fahrzeugfesten Dachelement 4 eine gestraffte Dachelementwand 29 angeordnet, die bevorzugt aus einem flexiblen Material ausgebildet ist, um entsprechend beim Absenken des beweglichen Dachelements 16 in die Nicht-Gebrauchsstellung 14 zusammengefaltet zu werden. In einer nicht gezeigten Ausführungsform ist die jeweilige Dachelementwand 29 austauschbar zwischen der Unterseite 28 des beweglichen Dachelements 16, dem Haltebügel 25 und dem fahrzeugfesten Dachelement 4 angeordnet, wobei die Dachelementwand 29 insbesondere mittels eines als Reisverschluss oder als Klettverschluss ausgebildeten Befestigungsmittels austauschbar angeordnet ist.

Darüber hinaus verfügt der Dachaufbau 9 über einen an dem fahrzeugfesten Dachelement 4 angeordneten Erweiterungsboden 30. Der Erweiterungsboden 30 ist im Rahmen einer Arbeitsbewegung 31 unabhängig von dem als Aufstelldach 17 ausgebildeten beweglichen Dachelement 16 zwischen einer eingefahrenen Bereitschaftsstellung 32 und einer über das fahrzeugfeste Dachelement 4 hinausragenden ausgefahrenen Erweiterungsstellung 33 verstellbar. Hierdurch weist der Erweiterungsboden 30 eine Vielzahl an Erweiterungsstellungen 33 auf.

Der Erweiterungsboden 30 ist in der gezeigten Ausführungsform zweckmäßigerweise zwischen der als Haltebügel 25 ausgebildeten Haltestruktur 21 an der der Anlenkseite 18 gegenüberliegenden Seite 26 des fahrzeugfesten Dachelements 4 angeordnet. In der Erweiterungsstellung 33 ragt der Erweiterungsboden 30 bevorzugt im Wesentlichen orthogonal zu der Campingfahrzeuglängsachse A-A über das fahrzeugfeste Dachelement 4 hinaus. In einer nicht dargestellten Ausführungsform des Campingfahrzeugs 1 ragt der Erweiterungsboden 30 im Wesentlichen axial zu der Campingfahrzeuglängsachse A-A über das fahrzeugfeste Dachelement 4 hinaus.

Der Erweiterungsboden 30 bildet in der Erweiterungsstellung 33 eine die Nutzfläche 6 erweiternde Zusatznutzfläche 34 aus. Durch die Zusatznutzfläche 31 wird das Raumangebot des Aufenthaltsraum 7 erhöht. Hierzu verfügt der Erweiterungsboden 30 über einen Ausziehmechanismus 35, der in der gezeigten Ausführungsform als Scherengitter 36 ausgebildet ist. Das Scherengitter 36 verfügt über relativ zueinander bewegliche Scherengitter-Streben 37. Der Ausziehmechanismus 35 ermöglicht so eine platzsparende Anordnung des Erweiterungsbodens 30 in der Bereitschaftsstellung 32. Der bevorzugt als Scherengitter 36 ausgebildete Auszugsmechanismus 35 verleiht dem Erweiterungsboden 30 neben der großzügig ausbildbaren Zusatznutzfläche 34 in einer der Erweiterungsstellungen 33 auch Stabilität.

In der gezeigten Ausführungsform des Campingfahrzeugs 1 verfügt der Erweiterungsboden 30 ferner über eine am fahrzeugfesten Dachelement 4 angeordnete Erweiterungsboden-Führungsschiene 38 und ein dieser gegenüberliegend angeordnetes Erweiterungsboden-Abschlusselement 39 auf. Bevorzugt ist die Erweiterungsboden-Führungsschiene 38 in das fahrzeugfeste Dachelement 4 eingelassen.

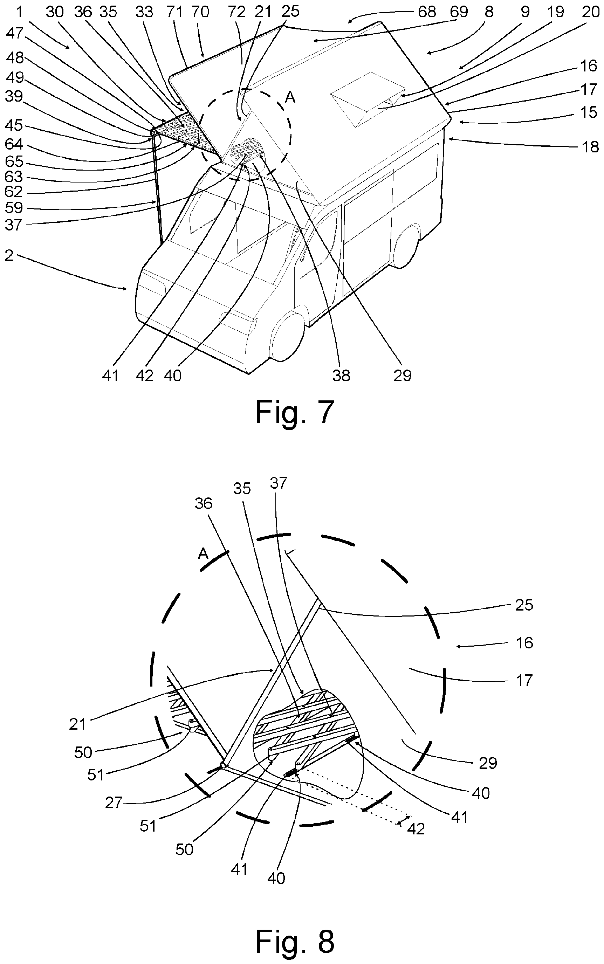

Die Erweiterungsboden-Führungsschiene 38 weist Führungsabschnitte 40 auf, die in der gezeigten Ausführungsform als Langloch 41 ausgebildet sind, wie insbesondere der vergrößerte Ausschnitt A in Fig. 8 zeigt. Zweckmäßigerweise weisen dabei alle Führungsabschnitte 40 eine gleiche Länge 42 auf und sind in Richtung der Campingfahrzeuglängsachse A-A äquidistant zueinander beabstandet.

In der gezeigten Ausführungsform ist das Erweiterungsboden-Abschlusselement 39 in Form eines L-Profils 43 ausgebildet. Das als L-Profil 43 ausgebildete Erweiterungsboden-Abschlusselement 39 weist eine Stirnseite 44, eine Rückseite 45 und eine Unterseite 46 auf. Zweckmäßigerweise sind an der Rückseite 45 des Erweiterungsboden-Abschlusselements 39 bevorzugt ebenfalls Führungsabschnitte 47 angeordnet. Auch diese sind bevorzugt als Langloch 48 ausgebildet, wie in der gezeigten Ausführungsform beispielsweise in der Fig. 8 dargestellt. Die Führungsabschnitte 47 weisen insbesondere eine gleiche Länge 49 auf und sind in Richtung der Campingfahrzeuglängsachse A-A äquidistant zueinander beabstandet.

Darüber hinaus sind in der gezeigten Ausführungsform die Führungsabschnitte 40 und die Führungsabschnitte 47 in axialer Richtung der Campingfahrzeuglängsachse A-A deckungsgleich angeordnet.

Jede Scherengitter-Strebe 37 verfügt über an ihren jeweiligen Enden 50 angeordnete Endabschnitte 51a und 51b. Sowohl an der Erweiterungsboden-Führungsschiene 38 als auch an dem Erweiterungsboden-Abschlusselement 39 sind eine Vielzahl an Scherengitter-Streben 37 über ihre jeweiligen Endabschnitte 51a, 51b mit den diesen zugeordneten Führungsabschnitten 40 der Erweiterungsboden-Führungsschiene 38 oder den Führungsabschnitten 47 des Erweiterungsboden-Abschlusselements 39 verbunden.

Durch die als Langloch 41, 47 ausgebildeten Führungsabschnitte 40, 47 sind insbesondere die Scherengitter-Streben 37 bei der Arbeitsbewegung 31 des Erweiterungsbodens 30 axial in Richtung der Campingfahrzeuglängsachse A-A verschiebbar. In der gezeigten Ausführungsform weist der Erweiterungsboden 30 in der Bereitschaftsstellung 32 eine Breite 52a auf, die breiter ist als eine Breite 52b des Erweiterungsbodens 30 in der Erweiterungsstellung 33. Beispielweise wird der Erweiterungsboden 30 bei einer Breite 52a von ca. 2820 mm bei einem Auszug von ca. 1500 mm beidseitig um ca. 80 mm schmäler. Der Erweiterungsboden 30 vergrößert damit die Nutzfläche 5 in Form der Zusatznutzfläche 34 um etwa 4,25 m².

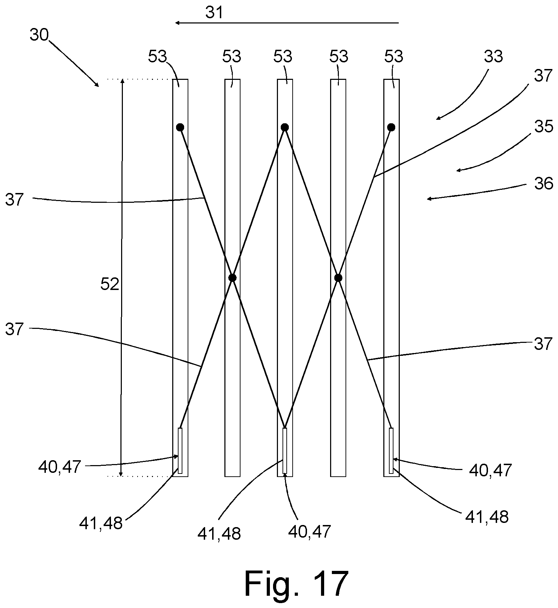

In Fig. 17 wird eine Prinzipskizze eines weiteren Scherengitter 36 in Erweiterungsstellung 33 dargestellt, das aufgrund von konstruktiven Änderungen der Scherengitterstruktur sowohl in der Bereitschaftsstellung 32 als auch in der Erweiterungsstellung 33 die gleiche Breite 52 aufweist. Das Scherengitter 36 verfügt hierzu zweckmäßigerweise neben den Scherengitter-Streben 37 über parallel zueinander angeordnete Querstreben 53. Diese verlaufen in Bezug zur Richtung der Arbeitsbewegung 31 des Erweiterungsbodens 30 orthogonal. Diese Ausgestaltung des Scherengitters 36 verfügt auch bei maximalem Auszug des Erweiterungsbodens 30 über eine gleichbleibende Breite 52 des. Hierdurch wird die Zusatznutzfläche 34 in Bezug auf deren Fläche zusätzlich optimiert.

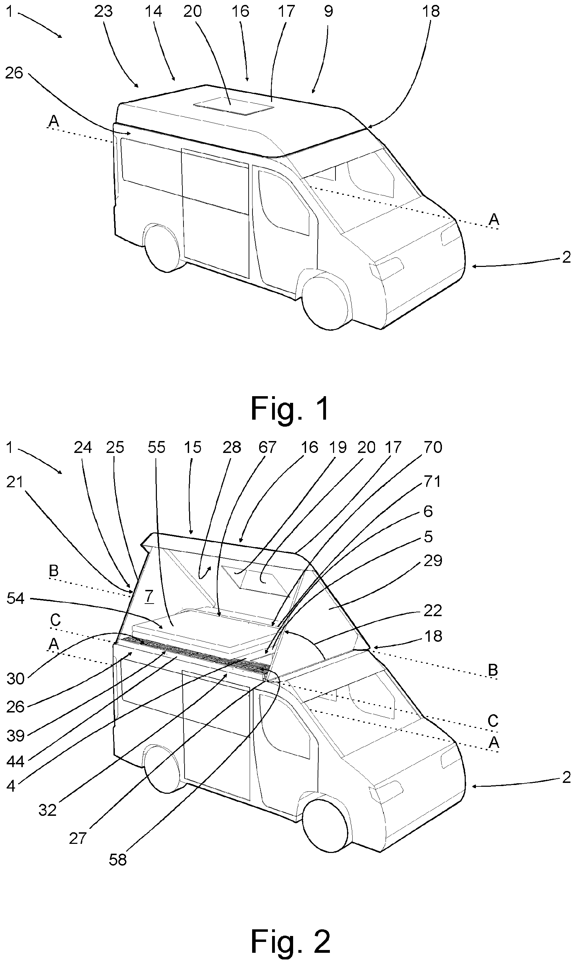

Die Zeltkonstruktion 8 weist zweckmäßigerweise eine erste Bodenunterlage 54 auf. Diese ist an der Oberseite 5 des fahrzeugfesten Dachelements 4 anordenbar oder angeordnet. Die erste Bodenunterlage 54 weist insbesondere eine oder mehrere Matratzen 55 auf. Ferner ist die Bodenunterlage 54, die insbesondere als Matratze 55 ausgebildet ist, auch am beweglichen Dachelement 16 angeordnet oder anordenbar. Dies ist zweckmäßigerweise dann der Fall, wenn der Innenraum 3 des Campingfahrzeugs 1 sehr niedrig ist. Durch das hochgestellte bewegliche Dachelement 16 und die daran angeordnete Bodenunterlage 54 wird sichergestellt, dass Personen im Innenraum 3 des Campingfahrzeugs 1 stehen können. Hierdurch ist die erste Bodenunterlage 54 geeignet, die Nutzfläche 5 und/oder die Zusatznutzfläche 34 des Aufenthaltsraums 7 derart auszulegen, dass der Aufenthaltsraum 7 insbesondere in eine Schlafstätte umfunktioniert wird. In der gezeigten Ausführungsform verfügt die Bodenunterlage 54 über zwei Matratzen 55, die übereinander stapelbar sind, wie beispielhaft in Fig. 2 dargestellt. Im Gegensatz hierzu sind in Fig. 14 die zwei Matratzen 55 beispielsweise nebeneinander angeordnet und überdecken sowohl die Nutzfläche 6 als auch die Zusatznutzfläche 34.

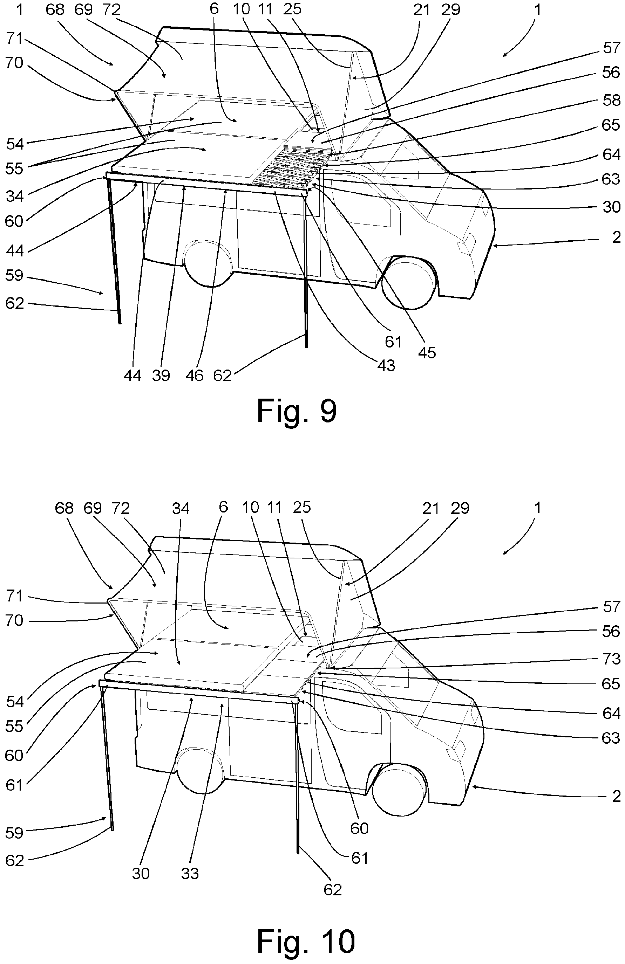

Ferner weist die Zeltkonstruktion 8 zweckmäßigerweise auch eine zweite Bodenunterlage 56 auf. Die zweite Bodenunterlage ist als begehbarer Bodenbeleg 57 ausgebildet, um im Aufenthaltsraum 6 einen Gang auszubilden. Der begehbare Bodenbelag 57 ist in der in den Fig. 10 bis 12 dargestellten Ausführungsform beispielsweise am Rand 58 des Erweiterungsbodens 30 ausgelegt, sodass alle Bereiche des Aufenthaltsraums 7 gut erreichbar sind.

Überdies ist dem Erweiterungsboden 30 eine den Erweiterungsboden 30 abstützende Stützstruktur 59 zugeordnet. Die Stützstruktur 59 dient als lastabtragendes Element für die sich durch den Erweiterungsboden 30 ergebenden Vertikallasten, wobei die Stützstruktur 59 gleichzeitig als raumgestaltendes Element eine größtmögliche Raumnutzung unterhalb des Erweiterungsbodens 30 ermöglicht. In der gezeigten Ausführungsform des Campingfahrzeugs 1 ist die Stützstruktur 59 derart am Erweiterungsboden 30 angeordnet, dass diese die Arbeitsbewegung 31 des Erweiterungsboden 30 mitmacht. Hierbei ist die Stützstruktur 59 zweckmäßigerweise auf der Unterseite 46 des Erweiterungsboden-Abschlusselements 39 angeordnet. Das Erweiterungsboden-Abschlusselement 39 verfügt über an seinen jeweiligen Enden 60 angeordnete Endabschnitte 61a und 61b. Die Stützstruktur 59 weist bevorzugt zwei Stützen 62 auf, wobei jeweils eine Stütze 62 an einem Endabschnitt 61a und 61b angeordnet ist. Je nach Größe des Erweiterungsbodens 30 sind auch drei, vier, fünf, sechs und mehr Stützen 62 als Stützstruktur 59 realisierbar. Die als Stützen 62 ausgebildete Stützstruktur 59 ist zweckmäßigerweise ausklappbar und/oder teleskopierbar. Die Stützstruktur 59 ist so optimal an die äußeren Geländegegebenheiten beispielsweise das Gelände des Campingplatzes, anpassbar und gleichzeitig während des Transports platzsparend anordenbar oder angeordnet.

Dem Erweiterungsboden 30 ist ferner eine Tragstruktur 63 zugeordnet. Durch die Tragstruktur 63 wird der Erweiterungsboden 30 in einer Erweiterungsstellung 33 stabilisiert. Auch die Tragstruktur 63 ist zweckmäßigerweise am Erweiterungsboden 30 angeordnet, sodass diese die Arbeitsbewegung 31 des Erweiterungsboden 30 mitmacht. Die Tragstruktur 63 ist an dem Erweiterungsboden-Abschlusselement 39 angeordnet, insbesondere an dessen Stirnseite 44, an dessen Rückseite 45 oder an dessen Unterseite 46. In der dargestellten Ausführungsform ist die Tragstruktur 63 an der Rückseite 45 des Erweiterungsboden-Abschlusselements 39 angeordnet. Die Tragstruktur 63 weist zwei als Träger 64 ausgebildete Tragelemente 65 auf, die zweckmäßigerweise ausklappbar und/oder teleskopierbar sind. Durch eine derartige Anordnung der Tragstruktur 63 ist diese in der Bereitschaftsstellung 32 platzsparend am Erweiterungsboden 30 anbringbar und trägt in der Erweiterungsstellung 33 dennoch zur Stabilisierung des Erweiterungsbodens 30 bei. Die als Träger 64 ausgebildeten Tragelemente 65 sind insbesondere in Form eines L-Profils, eines U-Profils, eines C-Profils oder eines rechteckigen Profils ausgebildet, wobei die Träger 64 in der gezeigten Ausführungsform einen quadratischen Querschnitt aufweisen. In dem der Erweiterungsboden 30 auf dem quadratischen Profil des Trägers 64 in der Erweiterungsstellung 33 aufliegt wird die Stabilität des Erweiterungsbodens 30 weiter erhöht.

Das L-Profil ist geeignet, die Scherengitter-Streben 37 auf einem horizontalen Bestandteil aufzunehmen. Das C-Profil und das U-Profil sind geeignet, die Scherengitter-Streben 37 zwischen den horizontal angeordneten Bestandteilen des U-Profils oder C-Profils aufzunehmen. Insbesondere eine Ausbildung der Träger 64 in Form eines C- oder U-Profils versteift den Erweiterungsboden 30 in der Erweiterungsstellung 33.

Die Zeltkonstruktion 8 des Dachaufbaus 9 verfügt über ein im Rahmen einer weiteren Ausklappbewegung 66 zwischen einer eingeklappten Nicht-Gebrauchsstellung 67 und einer ausgeklappten Gebrauchsstellung 68 verbringbares Erweiterungszelt 69. Das Erweiterungszelt 69 begrenzt in der ausgeklappten Gebrauchsstellung 68 den Aufenthaltsraum 7 und überdeckt die Nutzfläche 6 sowie die Zusatznutzfläche 34. Zweckmäßigerweise wird die Nutzfläche 6 und die Zusatznutzfläche 34 von dem Erweiterungszelt 69 in der ausgeklappten Gebrauchsstellung 68 vollständig überdeckt. Hierbei führt die Ausklappbewegung 66 gemessen ab der Haltestruktur 21 bevorzugt einen Winkel α zwischen 50° bis 100° aus.

Das Erweiterungszelt 69 weist eine Erweiterungszelttragstruktur 70 auf, die insbesondere als Erweiterungszeltbügel 71 ausgebildet ist, wobei die Erweiterungszelttragstruktur 70 in der ausgeklappten Gebrauchsstellung 68 eine gestraffte Erweiterungszeltwand 72 aus einem flexiblen Material aufspannt, wobei diese in der gezeigten Ausführungsform zumindest einerseits am Erweiterungszeltbügel 71 und andererseits an einer Unterseite 28 des beweglichen Dachelements 16 angeordnet ist.

Der Erweiterungszeltbügel 71 ist in der gezeigten Ausführungsform mittels eines Drehgelenks 73 mit dem fahrzeugfesten Dachelement 4 verbunden und entsprechend um eine Drehachse D-D des Drehgelenks 73 verschwenkbar. In der gezeigten Ausführungsform fallen die Drehachse C-C und die Drehachse D-D zusammen.

Das Erweiterungszelt 69 weist, wie bereits beschrieben, die Haltestruktur 21 auf, die der ausgeklappten Gebrauchsstellung 68 des Erweiterungszelts 69 das bewegliche Dachelement 16 in der hochgestellten Gebrauchsstellung 15 hält. Die Haltestruktur 21 ist insbesondere aus wenigstens einer Haltestrebe oder als ein Haltebügel 25 ausgebildet.

Zweckmäßigerweise wird durch die weitere Ausklappbewegung 66 des Erweiterungszelts 69 in die ausgeklappte Gebrauchsstellung 68 auch die Haltestruktur 21 mittels der Ausklappbewegung 22 in die hochgestellte Haltestellung 24 verbracht. Die weitere Ausklappbewegung 66 bewirkt somit bevorzugt auch die Ausklappbewegung 22. Hierzu sind die als Erweiterungszeltbügel 71 ausgebildete Erweiterungszeltstruktur 70 und die als Haltebügel 25 ausgebildete Haltestruktur 21 zweckmäßigerweise derart angeordnet, dass die Drehgelenke 27, 73 auf einer gemeinsamen Drehachse angeordnet sind und somit die Drehachse C-C und die Drehachse D-D zusammenfallen. Durch diese konstruktive Ausgestaltung wird ein Aufbau der Zeltkonstruktion 8 vereinfacht.

Zwischen der als Erweiterungszeltbügel 71 ausgebildeten Erweiterungszelttragstruktur 70 und dem fahrzeugfesten Dachelement 4 ist eine Trennwand 74 einsetzbar, die insbesondere als Insektenschutzgitter 75 ausgebildet ist. Hierdurch lässt sich vorteilhafterweise der Aufenthaltsraum 7 verschließen, selbst wenn sich der Erweiterungsboden 30 in der Bereitschaftsstellung befindet. Die Trennwand 74 ist bevorzugt mittels eines als Reisverschluss oder als Klettverschluss ausgebildeten Befestigungsmittels austauschbar angeordnet.

Ferner verfügt die Zeltkonstruktion 8 über ein den Aufenthaltsraum 7 begrenzendes, die Zusatznutzfläche 34 überdeckendes Tarpzelt 76. Das Tarpzelt 76 weist eine Tarpzeltwand 77 auf, die am Erweiterungszelt 69 und am Erweiterungsboden 30 anbringbar oder angebracht ist. Hierdurch wird ein ganzheitlicher Schutz des Aufenthaltsraums 7 vor Wind und Wetter gewährleistet. Die Tarpzeltwand 77 ist derart anordenbar, dass sie an wenigstens einer freien Kante 78 des Erweiterungsboden 30 über diesen hinausragt, um zwischen der freien Kante 78 des Erweiterungsbodens 30 und der Tarpzeltwand 77 einen Zwischenraum 79 zu bilden, durch den hindurch ein Zutritt in den Aufenthaltsraum 7 von außerhalb der Fahrzeugbasis 2 her ermöglicht ist. Der Aufstieg wird in der dargestellten Ausführungsform durch eine Leiter 80 realisiert.

In einer nicht dargestellten Ausführungsform des Campingfahrzeugs 1 ist die Tarpzeltwand 76 derart am Erweiterungszelt 69 und an freien Kanten 78 des Erweiterungsbodens 30 anbringbar, dass die Tarpzeltwand 76 eine Trennwand bildet, durch die der über der Zusatznutzfläche 34 liegende Raumbereich 81 des Aufenthaltsraums 7 gegen einen Zutritt von außerhalb der Fahrzeugbasis 2 her verschlossen ist.

Die Erweiterungszeltwand 72 und die Tarpzeltwand 77 können Fenster oder sonstige Belüftungsöffnungen aufweisen.

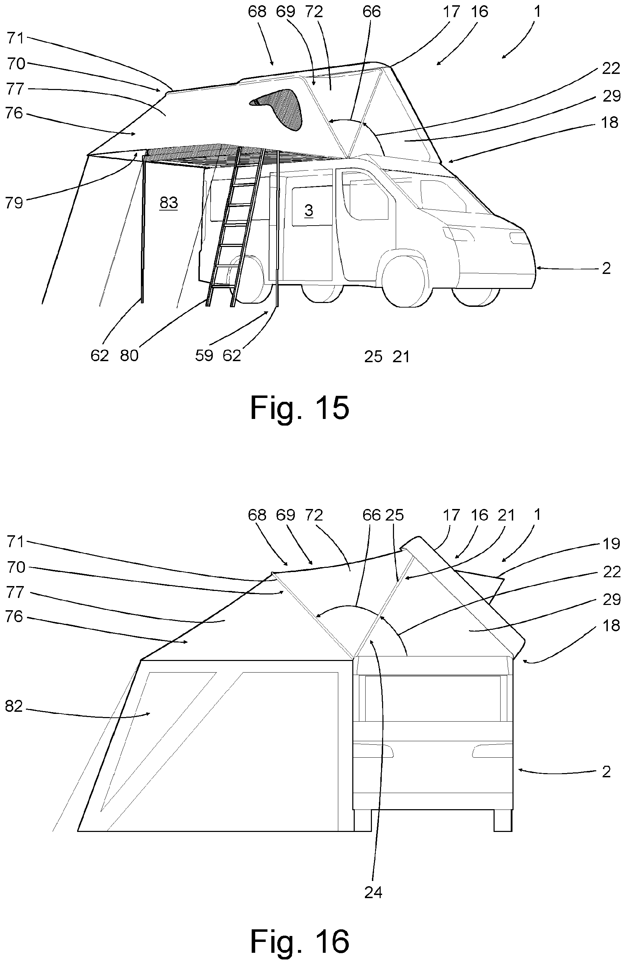

Das Campingfahrzeug 1 kann darüber hinaus ein Vorzelt 82 aufweisen, wie in Fig. 16 dargestellt. Hierdurch wird auch der Raumbereich 83 unterhalb des Erweiterungsbodens 30 nutzbar gemacht und gleichzeitig vor Wind und Wetter geschützt.

Ferner weist der Erweiterungsboden 30 eine sich im Wesentlichen über die Zusatznutzfläche 34 erstreckende Fangstruktur 84 auf, um ein Herabfallen von Gegenständen vom Erweiterungsboden 30 zu verhindern. Die Fangstruktur 84 ist hierzu zweckmäßigerweise unter- und/oder oberhalb des Erweiterungsbodens 30 angeordnet. Fig. 8 stellt eine unterhalb des Erweiterungsbodens 30 angeordnete Fangstruktur 84 in Form eines Netzes 85 dar. Des Weiteren ist die Fangstruktur 84 geeignet Dämmmaterial, wie Dämmplatten, aufzuweisen, um den Aufenthaltsraum 7 thermisch zu isolieren. Insbesondere ermöglicht das Dämmmaterial eine der Jahreszeit entsprechende angenehme Temperatur des Aufenthaltsraumes 7, d. h. im Winter eine höhere Temperatur als die Umgebungstemperatur und in den Sommermonaten eine kühlere Temperatur als die Umgebungstemperatur. Die Fangstruktur 84 macht zweckmäßigerweise die Arbeitsbewegung 31 des Erweiterungsboden 30 mit, wodurch sichergestellt wird, dass bei der Arbeitsbewegung 31 keine Gegenstände aus dem Aufenthaltsraum 7 von diesem herabfallen können.

## Patentansprüche

1. Campingfahrzeug (1), mit einer ein an seiner Oberseite (5) eine Nutzfläche (6) eines Aufenthaltsraumes (7) definierendes, fahrzeugfestes Dachelement (4) aufweisenden Fahrzeugbasis (2) und mit einem Dachaufbau (9), der ein über dem fahrzeugfesten Dachelement (4) angeordnetes, zwischen einer abgesenkten Nicht-Gebrauchsstellung (14) und einer hochgestellten Gebrauchsstellung (15) verbringbares bewegliches Dachelement (16) aufweist, das in der hochgestellten Gebrauchsstellung (15) den Aufenthaltsraum (7) begrenzt, **dadurch gekennzeichnet, dass** der Dachaufbau (9) einen an dem fahrzeugfesten Dachelement (4) angeordneten, im Rahmen einer Arbeitsbewegung (31) unabhängig von dem beweglichen Dachelement (16) zwischen einer eingefahrenen Bereitschaftsstellung (32) und einer über das fahrzeugfeste Dachelement (4) hinausragenden ausgefahrenen Erweiterungsstellung (33) verstellbaren Erweiterungsboden (30) aufweist, der in der Erweiterungsstellung (33) eine die Nutzfläche (6) erweiternde Zusatznutzfläche (34) ausbildet.

2. Campingfahrzeug (1) nach Anspruch 1, **dadurch gekennzeichnet, dass** dem Erweiterungsboden (30) eine Stützstruktur (59) zugeordnet ist, wobei zweckmäßigerweise die Stützstruktur (59) am Erweiterungsboden (30) angeordnet ist, sodass diese die Arbeitsbewegung (31) des Erweiterungsboden (30) mitmacht.

3. Campingfahrzeug (1) nach Anspruch 2, **dadurch gekennzeichnet, dass** die Stützstruktur (59) an einem Erweiterungsboden-Abschlusselement (39) des Erweiterungsbodens (30) angeordnet ist, insbesondere an einer Unterseite (46) des Erweiterungsboden-Abschlusselements (39).

4. Campingfahrzeug (1) nach einem der vorhergehenden Ansprüche, **dadurch gekennzeichnet, dass** dem Erweiterungsboden (30) eine Tragstruktur (63) zugeordnet ist, wobei zweckmäßigerweise die Tragstruktur (63) am Erweiterungsboden (30) angeordnet ist, sodass diese die Arbeitsbewegung (31) des Erweiterungsboden (30) mitmacht.

5. Campingfahrzeug (1) nach Anspruch 4, **dadurch gekennzeichnet, dass** die Tragstruktur (63) an dem Erweiterungsboden-Abschlusselement (39) des Erweiterungsbodens (30) angeordnet ist, insbesondere an der Unterseite (46) oder Stirnseite (44) des Erweiterungsboden-Abschlusselements (44).

6. Campingfahrzeug (1) nach einem der vorhergehenden Ansprüche, **dadurch gekennzeichnet, dass** der Erweiterungsboden (30) einen Ausziehmechanismus (35) aufweist, der zweckmäßigerweise als Scherengitter (36) ausgebildet ist, wobei zweckmäßigerweise der Erweiterungsboden (30) in der Bereitschaftsstellung (32) und in der Erweiterungsstellung (33) eine gleiche Breite (52) aufweist.

7. Campingfahrzeug (1) nach einem der vorhergehenden Ansprüche, **dadurch gekennzeichnet, dass** der Erweiterungsboden (30) in der Erweiterungsstellung (33) im Wesentlichen orthogonal zu einer Campingfahrzeuglängsachse (A-A) über das fahrzeugfeste Dachelement (4) hinausragt.

8. Campingfahrzeug (1) nach einem der vorhergehenden Ansprüche, **dadurch gekennzeichnet, dass** der Dachaufbau (9) eine Zeltkonstruktion (8) aufweist, wobei zweckmäßigerweise die Zeltkonstruktion (8) ein im Rahmen einer Ausklappbewegung (66) zwischen einer eingeklappten Nicht-Gebrauchsstellung (67) und einer ausgeklappten Gebrauchsstellung (68) verbringbares Erweiterungszelt (69) aufweist, das in einer Gebrauchsstellung (68) den Aufenthaltsraum (7) begrenzt und die Nutzfläche (6) und die Zusatznutzfläche (34) überdeckt.

9. Campingfahrzeug (1) nach Anspruch 8, **dadurch gekennzeichnet, dass** die Nutzfläche (6) und die Zusatznutzfläche (34) von dem Erweiterungszelt (69) in einer Gebrauchsstellung (68) vollständig überdeckt wird.

10. Campingfahrzeug (1) nach Anspruch 8 oder 9, **dadurch gekennzeichnet, dass** das Erweiterungszelt (69) eine Erweiterungszelttragstruktur (70) aufweist, die in der ausgeklappten Gebrauchsstellung (68) eine gestraffte Erweiterungszeltwand (72) aus einem flexiblen Material aufspannt, wobei diese einerseits an der Erweiterungszelttragstruktur (70) und andererseits an einer Unterseite (28) des beweglichen Dachelements (16) angeordnet ist.

11. Campingfahrzeug (1) nach einem der Ansprüche 8 bis 10, **dadurch gekennzeichnet, dass** die Zeltkonstruktion (8) ferner ein den Aufenthaltsraum (7) begrenzendes, die Zusatznutzfläche (34) überdeckendes Tarpzelt (76) aufweist, wobei zweckmäßigerweise das Tarpzelt (76) eine Tarpzeltwand (77) aufweist, die am Erweiterungszelt (69) und am Erweiterungsboden (30) anbringbar oder angebracht ist.

12. Campingfahrzeug (1) nach Anspruch 11, **dadurch gekennzeichnet, dass** die Tarpzeltwand (77) derart anordenbar ist, dass sie an wenigstens einer freien Kante (78) des Erweiterungsbodens (30) über diesen hinausragt, um zwischen der freien Kante (78) des Erweiterungsbodens (30) und der Tarpzeltwand (77) einen Zwischenraum (79) zu bilden, durch den hindurch ein Zutritt in den Aufenthaltsraum (7) von außerhalb der Fahrzeugbasis (2) her ermöglicht ist.

13. Campingfahrzeug (1) nach Anspruch 11 oder 12, **dadurch gekennzeichnet, dass** die Tarpzeltwand (77) derart am Erweiterungszelt (69) und an freien Kanten (78) des Erweiterungsbodens (30) anbringbar ist, dass sie eine Trennwand bildet, durch die der über der Zusatznutzfläche (34) liegende Raumbereich (81) des Aufenthaltsraums (7) gegen einen Zutritt von außerhalb der Fahrzeugbasis (2) her verschlossen ist.

14. Campingfahrzeug (1) nach einem der vorhergehenden Ansprüche, **dadurch gekennzeichnet, dass** der Dachaufbau (9) eine Haltestruktur (21) aufweist, die in der ausgeklappten Gebrauchsstellung (68) des Erweiterungszelts (69) das bewegliche Dachelement (16) in der hochgestellten Gebrauchsstellung (15) hält, wobei die Haltestruktur (21) insbesondere aus wenigstens einer Haltestrebe oder einem Haltebügel (25) ausgebildet ist, wobei zweckmäßigerweise die Haltestruktur (21) durch die Ausklappbewegung (66) des Erweiterungszelts (69) in die ausgeklappte Gebrauchsstellung (68) in eine Haltestellung (24) verbringbar ist oder verbracht wird.

15. Campingfahrzeug (1) nach einem der vorhergehenden Ansprüche, **dadurch gekennzeichnet, dass** der Erweiterungsboden (30) eine sich im Wesentlichen über die Zusatznutzfläche (34) erstreckende Fangstruktur (84) aufweist, um ein Herabfallen von Gegenständen vom Erweiterungsboden (30) zu verhindern, wobei zweckmäßigerweise die Fangstruktur (84) unter- und/oder oberhalb des Erweiterungsbodens (30) angeordnet ist.
